# EUROPEAN PATENT APPLICATION

(11) **EP 4 727 090 A2**
(43) Date of publication of application: **15.04.2026**
(21) Application number: 26161244.4
(22) Date of filing: 29.04.2024
(51) Int. Cl.: H04L 67/50

(54) **SECURITY-ORIENTED VIRTUAL ENVIRONMENT FOR IN-FLIGHT PASSENGER INTERACTIONS**

(30) Priority: 03.05.2023 US 202363499872 P; 19.09.2023 US 202318470166
(62) Divisional of application: 24173036.5
(71) Applicant: Panasonic Avionics Corporation, Irvine, CA 92612 (US)
(72) Inventor: KASODY, Robert, California, 92612 (US); ASRANI, Ali, California, 92612 (US); TANG, Min-Hsuan, California, 92612 (US); KIDD, Joseph, California, 92612 (US); CHEN, Tim, California, 92612 (US); LIM, Siew Sin, California, 92612 (US); KAPILA, Vinod, California, 92612 (US)
(74) Representative: Barker Brettell LLP

(57) **Abstract**

Technical solutions are described that enable passengers on a commercial passenger vehicle interact with each other during a trip using their electronic devices by communicating using an on-board communication platform. The platform can provide an in-flight shared virtual environment or world that is accessible and traversable by passengers and that includes real-world and/or virtual for passengers to consume. Passengers can create or use virtual avatars to preserve anonymity and privacy while interacting and communicating with others within the in-flight shared virtual environment or world. Data records/logs capturing cross-passenger interactions or communications within the in-flight shared virtual environment can be purged after the vehicle's flight.

## Description

### CROSS-REFERENCE TO RELATED APPLICATIONS

This application claims priority to, and the benefit of, U.S. Provisional Application No. 63/499,872, titled IN-FLIGHT AUGMENTED/VIRTUAL REALITY PASSENGER INTERACTION METHOD AND APPARATUS and filed on May 3, 2023. The aforementioned application is herein incorporated in its entirety, including any drawings and appendices.

### TECHNICAL FIELD

The present disclosure is related to in-flight or in-vehicle entertainment systems, and the privacy and security of users thereof.

### BACKGROUND

Commercial travel has evolved to provide entertainment options to passengers traveling to their destinations. For example, in an airplane or train, in-vehicle systems that include seatback monitors can provide entertainment options to passengers such that passengers can watch movies or television shows as they travel to their destinations. Passenger vehicles have also begun to provide connectivity tools that may provide additional opportunities to passengers for entertainment or productivity.

### SUMMARY

The present disclosure generally relates to secure communications and interactions between passengers onboard a commercial passenger vehicle. An in-vehicle system onboard a commercial passenger vehicle is configured to provide an in-flight shared virtual environment that is at least accessible, traversable, navigable, and/or interactable by the vehicle's passengers via personal electronic devices and/or via seatback display devices of the vehicle. For example, the in-flight shared virtual environment is an in-flight metaverse in which passengers can comprehensively and immersively consume travel content (e.g., flight maps, aircraft interior layouts, destination previews), entertainment content (e.g., movies, TV shows, music), and/or the like. According to example embodiments, the passengers can enjoy such virtual activities provided via the in-flight shared virtual environment in collaboration with other passengers onboard the vehicle in a secure manner.

In particular, example embodiments relate to security within an in-flight shared virtual environment. Passengers can be virtually represented within the in-flight shared virtual environment via selected avatars that are characterized with desired anonymity levels. Further, data logs or data records generated for the operation of the in-flight shared virtual environment can be purged subsequent to the vehicle reaching a destination. Two passengers can choose whether to continue their virtual interaction or collaboration within the in-flight shared virtual environment after reaching their destination, or to forget about their virtual interaction/collaboration with no obligation or record.

Further aspects of the invention are disclosed in the following clauses:
1. An in-flight entertainment and communication (IFEC) system comprising:
   at least one processor; and
   at least one memory storing instructions that, when executed by the at least one processor, cause the IFEC system to:
      subsequent to a commercial passenger vehicle departing on a journey, generate a shared virtual environment that is accessible and traversable by passengers of the commercial passenger vehicle at least in part via seatback display devices located within the commercial passenger vehicle, wherein the shared virtual environment comprises at least one interactable virtual feature related to a destination of the journey or an interior layout of the commercial passenger vehicle;
      select, for a first passenger of the commercial passenger vehicle requesting entry into the shared virtual environment, a first virtual avatar from a plurality of virtual avatars associated with the first passenger, the first virtual avatar being configured to convey a number of personal attributes of the first passenger according to an anonymity level indicated by the first passenger;
      operate the shared virtual environment to facilitate a virtual interaction between the first virtual avatar associated with the first passenger and a second virtual avatar that represents a second passenger of the commercial passenger vehicle, wherein the virtual interaction and the personal attributes conveyed by the first virtual avatar are captured by state data for the shared virtual environment that is locally stored onboard the commercial passenger vehicle; and
      in response to the commercial passenger vehicle concluding the journey, perform a security processing of the state data at least with respect to the virtual interaction and the personal attributes captured within the state data.
2. The IFEC system of clause 1, wherein the instructions further cause the IFEC system to:
   receive, at a time during or subsequent to the virtual interaction, a request for a post-journey communication channel between the first passenger and the second passenger;
   provide, in response to the request, the post-journey communication channel based on transmitting, to a personal electronic device operated by one of the first passenger or the second passenger, contact information for another one of the first passenger or the second passenger; and
   indicate, to each of the first passenger and the second passenger, an in-vehicle location for each of the first passenger and the second passenger via the at least one interactable virtual feature related to the interior layout of the commercial passenger vehicle.
3. The IFEC system of clause 1, wherein the instructions further cause the IFEC system to:
   determine a likelihood that the first passenger and the second passenger will request a post-journey communication channel based on the virtual interaction between the first virtual avatar and the second virtual avatar; and
   in response to the likelihood being greater than a threshold, share the state data that captures the virtual interaction to a second shared virtual environment that is accessible outside of the commercial passenger vehicle to enable the second shared virtual environment to resume the virtual interaction subsequent to the commercial passenger vehicle concluding the journey.
4. The IFEC system of clause 1, wherein the instructions further cause the IFEC system to:
   based on analyzing the virtual interaction, query the first passenger to use a different virtual avatar from the plurality of virtual avatars, the different virtual avatar being configured to convey a fewer number of personal attributes based on being associated with a higher anonymity level relative to the first virtual avatar.
5. The IFEC system of clause 1, wherein the instructions further cause the IFEC system to:
   subsequent to the commercial passenger vehicle concluding the journey, store, in profile data associated with the first passenger, an indication that the first virtual avatar was used during the journey, wherein the indication is configured to be provided to the first passenger prior to a second journey by the first passenger.
6. The IFEC system of clause 1, wherein the virtual interaction comprises the first passenger and the second passenger participating in a movie experience in which a mutually-selected movie is modified to include the first virtual avatar and the second virtual avatar with visual content of the mutually-selected movie.
7. The IFEC system of clause 1, wherein the plurality of virtual avatars associated with the first passenger comprises a particular virtual avatar associated with a different shared virtual environment, and wherein the instructions further cause the IFEC system to:
   receive, from the first passenger, a request to modify attributes of the particular virtual avatar; and
   transmit, to a system operating the different shared virtual environment, an indication of the request to modify the particular virtual avatar.
8. The IFEC system of clause 1, further comprising the seatback display devices, each seatback display device being uniquely associated with a different passenger of the commercial passenger vehicle, wherein the shared virtual environment is visually provided to the first passenger of the commercial passenger vehicle via both a corresponding seatback display device and one or more personal electronic devices operated by the first passenger, and wherein the instructions further cause the IFEC system to:
   receive the anonymity level indicated by the first passenger via one of the corresponding seatback display device or the one or more personal electronic devices.
9. The IFEC system of clause 8, wherein the one or more personal electronic devices comprises a virtual reality head-mounted display device that is communicably coupled with the corresponding seatback display device.
10. The IFEC system of clause 1, wherein the security processing includes deleting or purging the state data.
11. The IFEC system of clause 1, wherein the security processing includes flagging the state data based on the state data capturing at least one of the virtual interaction or the personal attributes, and securely transferring the state data to a ledger database accessible by other mobility providers.
12. A method comprising:
   providing, by an IFEC system onboard a commercial passenger vehicle to passengers of the commercial passenger vehicle, access to a shared virtual environment that comprises at least one interactable virtual feature related to a destination of a journey of the commercial passenger vehicle or an interior layout of the commercial passenger vehicle;
   selecting, for a first passenger, a first virtual avatar from a set of virtual avatars linked to profile data associated with the first passenger, the first virtual avatar being configured to represent a set of personal attributes of the first passenger within the shared virtual environment based on an anonymity level that characterizes the first virtual avatar;
   detecting, within the shared virtual environment, a virtual interaction between the first virtual avatar and a second virtual avatar representing personal attributes of a second passenger, wherein the virtual interaction is captured by data logs that are generated by the IFEC system during operation of the shared virtual environment; and
   subsequent to the commercial passenger vehicle arriving to the destination of the journey, performing a security processing of at least a portion of the data logs that relates to the virtual interaction.
13. The method of clause 12, further comprising:
   identifying, using the profile data associated with the first passenger, a recommended passenger to meet via the shared virtual environment; and
   indicating, within the shared virtual environment via one of a seatback monitor or a personal electronic device operated by the first passenger, the recommended passenger.
14. The method of clause 12, further comprising:
   during the operation of the shared virtual environment, grouping a set of virtual avatars being operated by a set of passengers into an area within the shared virtual environment based on the set of virtual avatars having a common anonymity level.
15. The method of clause 12, wherein the anonymity level is one of a plurality of anonymity levels, at least one of which includes a given virtual avatar for a given passenger visually indicating a vehicle seat number of the given passenger.
16. The method of clause 12, further comprising:
   receiving, at a time during or subsequent to the virtual interaction, a request for a post-journey communication channel between the first passenger and the second passenger; and
   providing, in response to the request, the post-journey communication channel based on transmitting, to a personal electronic device operated by one of the first passenger or the second passenger, contact information for another one of the first passenger or the second passenger.
17. A non-transitory computer-readable storage medium storing instructions that, when executed by at least one processor of an in-vehicle system, cause the in-vehicle system to implement a method comprising:
   subsequent to a commercial passenger vehicle departing on a journey, generating an in-flight virtual environment that is accessible by passengers of the commercial passenger vehicle, the in-flight virtual environment being synchronized from a ground-based platform that provides a shared virtual environment;
   selecting a first virtual avatar from a plurality of virtual avatars associated with the first passenger to represent the first passenger within the in-flight virtual environment, the first virtual avatar being configured to represent the first passenger according to an anonymity level;
   facilitating, within the shared virtual environment, a virtual interaction between the first virtual avatar representing the first passenger and a second virtual avatar representing a second passenger of the commercial passenger vehicle; and
   subsequent to re-establishing connection to a ground-based server system at an end of the journey, declining to synchronize the virtual interaction with the ground-based server system, such that the ground-based server system has no record of the virtual interaction when providing the shared virtual environment.
18. The non-transitory computer-readable storage medium of clause 17, wherein the method implemented by the in-vehicle system further comprising:
   evaluating a respective anonymity level that characterizes each of the plurality of virtual avatars based on profile data associated with the first passenger, wherein the first virtual avatar is selected based on the respective anonymity level characterizing the first virtual avatar satisfying the anonymity level indicated by the first passenger.
19. The non-transitory computer-readable storage medium of clause 17, wherein the in-flight virtual environment comprises a bulletin board via which the first passenger provides an invitation for virtual interactions with other passengers of the commercial passenger vehicle, wherein the virtual interaction is facilitated based on the second passenger viewing the invitation by the first passenger via the bulletin board.
20. The non-transitory computer-readable storage medium of clause 17, wherein the shared virtual environment is generated to be further accessible by passengers of at least one other commercial passenger vehicle, the at least one other commercial passenger vehicle and the commercial passenger vehicle being operated by a common mobility provider.
21. The non-transitory computer-readable storage medium of clause 17, wherein the method implemented by the in-vehicle system further comprises:
   receiving, at a time during or subsequent to the virtual interaction, a request for a post-journey communication channel between the first passenger and the second passenger; and
   facilitating, in response to the request, the post-journey communication channel based on transmitting, to a personal electronic device operated by one of the first passenger or the second passenger, contact information for another one of the first passenger or the second passenger.
22. The non-transitory computer-readable storage medium of clause 17, wherein the method implemented by the in-vehicle system further comprises:
   based on analyzing the virtual interaction, query the first passenger to use a different virtual avatar from the plurality of virtual avatars, the different virtual avatar being configured to convey a fewer number of personal attributes based on being associated with a higher anonymity level relative to the first virtual avatar.

These, and other aspects are disclosed throughout the present document.

### BRIEF DESCRIPTION OF THE DRAWINGS

FIG. 1 is a block diagram of an example commercial passenger vehicle with an example system for providing an in-flight shared virtual environment for passengers onboard the commercial passenger vehicle.
FIG. 2 is a block diagram of an example system for generating and providing an in-flight shared virtual environment in which passengers of a commercial passenger vehicle can securely interact with other passengers of the commercial passenger vehicle.
FIG. 3 is a block diagram of an example system for generating and providing an in-flight shared virtual environment in which passengers of commercial passenger vehicles can securely interact with other passengers.
FIGs. 4A-4B are flow diagrams illustrating example operations for providing an in-flight shared virtual environment for secure interactions between passengers onboard a commercial passenger vehicle.
FIG. 5 is a block diagram of a computing system on which embodiments described herein may be implemented.

### DETAILED DESCRIPTION

### General Overview and Example Technical Advantages

Commercial passenger vehicles provide entertainment options and connectivity tools for passengers to consume and use during their journeys to their destinations. The present disclosure enhances technical systems onboard commercial passenger vehicles that provide these experiences to passengers, based on introducing solutions related to in-flight shared virtual environments, such as in-flight metaverses.

An in-flight shared virtual environment introduces various benefits and improvements to passenger content consumption, to passenger experience onboard a commercial passenger vehicle, to management of passenger information, and/or the like. In some examples, an in-flight shared virtual environment realizes or implements interactive content for passengers, such that passengers are not limited to view-only or read-only entertainment content. In some examples, an in-flight shared virtual environment enables passengers to communicate and interact with one another. These virtual meetings between passengers onboard a commercial passenger vehicle can include casual, social, and/or unexpected meetings, as well pre-planned meetings (e.g., business meetings, conferences/calls). Within an in-flight shared virtual environment, passengers can, for example, discover and communicate/chat with other passengers traveling to the same destination, gain friendships or relationships, meet and collaborate on a common goal or objective, and/or the like.

Accordingly, example embodiments provides techniques and systems that significantly increase or expand passenger-to-passenger interactions and communications onboard a commercial passenger vehicle. Because a commercial passenger vehicle can transport a high number of passengers that are likely unfamiliar and unknown to many others onboard the vehicle, the in-flight shared virtual environment needs to facilitate cross-passenger interaction and communication in a secure manner. For example, a first passenger may feel uncomfortable after a virtual interaction with another passenger and may not desire to continue further interaction/communication. As a further example, passengers may wish for their virtual communications to be private and confined to the context of their travel journey.

Technical solutions disclosed herein include techniques, systems, applications, and the like that allow passengers to interact anonymously with other passengers within the same commercial passenger vehicle in a secure in-flight entertainment (IFE) system using virtual or digital avatars associated with their passenger profiles or digital personas. While maintaining a specified anonymity or privacy level, similar passengers (with respect to non-anonymized attributes) can be matched and encouraged to interact/communicate within a shared virtual environment. In some embodiments, a seat location or in-vehicle location of passengers participating within the shared virtual environment is kept private. Passengers who interact/communicate with others via their respective virtual avatars can meet, collaborate, exchange messages, gain friendships, and more using the shared virtual environment, or a virtual world platform having both virtual and real-life experiences. For example, two passengers traveling to the same destination have the opportunity in real-time to arrange to meet after the journey at a physical location. As another example, two or more passengers traveling together can continue a private or personal pre-journey conversation while within the shared virtual environment.

Only passengers feel comfortable after virtually meeting may be provided with a post-journey or post-flight communication channel (e.g., personal contact information, social media profiles on a social media platform). Passengers are able to select different virtual avatars during the journey (and for subsequent journeys) to further maintain the anonymity or discretion. Passengers can also feel secure because there IFE interactions are purged at the end of the flight. For example, while the shared virtual environment (or at least certain third-party features within the environment) can be generated or synchronized from other (ground-based) servers, the example systems disclosed herein are configured to decline synchronization or exchange of data records of cross-passenger communications within the shared virtual environment.

In some embodiments, example in-vehicle systems (e.g., IFE systems) are configured to provide the shared virtual environment to passengers in an extended reality (XR) (e.g., augmented reality (AR), virtual reality (VR), mixed reality (MR)) form. For example, an IFE system includes an on-board server that implements XR applications and provides XR content to devices connected thereto. In some example XR applications and content, virtually-generated content, such as digital augmentations, can be combined with real-world elements. For example, digital characters and objects can visually appear in a real-world experience through some XR applications or features. In some examples, XR features provided with a shared virtual environment are fully or immersively virtual; for example, a passenger or user of the shared virtual environment is completely immersed in the environment using a head-mounted display device or similar XR (or VR) technology. For example, passengers can operate head-mounted display devices communicably coupled to an IFE system to view, access, and traverse a shared virtual environment or metaverse. In some examples, passengers can operate at least one of personal electronic devices or seatback display devices to view, access, and traverse a shared virtual environment or metaverse. In an XR form, the in-flight shared virtual environment provides a digital space that enables users (passengers) to play, explore, and connect with other virtual avatars for work, play, learning, and shopping. In addition, it may allow a user to connect with a community without physically being in the exact location. Such interaction can be performed using a smartphone, a computer, or XR devices that offer complete metaverse immersion. An XR form of an in-flight shared virtual environment further allows immersive experience with entertainment content onboard the vehicle, including concerts, movies, TV shows, live events, and/or the like.

Other technical solutions disclosed herein enables users/passengers to play and build virtual worlds with the option to monetize their experiences, services, and products for sale or trade. This technology allows users to own non-interchangeable in-game assets such as non-fungible tokens (NFTs), and users can own, sell, and trade virtual real estate in a three-dimensional world-build platform or feature implemented within the shared virtual environment.

Thus, the present disclosure provides technical solutions for passengers on a commercial vehicle (e.g., airlines passengers in a flight) to interact with the in-flight entertainment system using metaverse and/or AR/VR technology, technical solutions including a meta-avatar system for increasing entertainment options and content, technical solutions for allowing social interaction among passengers (thus enabling passengers to socialize and interact with each other during a journey, leading to a more enjoyable and less isolated experience), and technical solutions that provide XR experiences in an in-flight entertainment system for a more innovative and more appealing experience for passengers. These technical solutions, including those for integrating virtual avatars or meta-avatars into an in-flight entertainment system, provide several benefits, including the following:
- Enhanced entertainment experience: By incorporating virtual representations of passengers into the entertainment experience, the disclosed solutions can offer a more interactive and engaging experience for passengers during their flight.
- Increased social interaction: Meta-avatars can provide passengers with the opportunity to interact with each other and participate in virtual activities together, enhancing the social aspect of the in-flight experience.
- Increased third-party opportunities: Third-party services or suppliers can participate in a shared virtual environment to offer in-flight shopping and entertainment purchases through the meta-avatar system and solutions disclosed herein.
- Improved profile or data continuity: By offering a more enjoyable and engaging in-flight experience, passengers are satisfied and motivated to continue developing personal profiles (e.g., loyalty accounts with a mobility provider) to continuously enhance subsequent in-flight experiences.

### Example Embodiments for In-Flight Shared Virtual Environments/Worlds

In some embodiments, a metaverse application may be implemented to allow passengers to meet during flight. For example, this app allows passengers to interact anonymously with another passengers within the same flight in a secure IFE environment using an avatar from their digital locker to match based on preferred digital profile particulars passengers to meet, collaborate, exchange messages, gain friendships, and more with other passengers. Together, passengers can traverse and navigate a virtual world having both virtual and real-life experiences. Only passengers who feel comfortable after virtually meeting on the IFE may exchange contact information, social media profiles, and/or the like.

In some embodiments, a digital locker refers to a plurality of virtual avatars, digital profiles or accounts, or digital personas associated with a user. For example, a user may have a first virtual avatar created and primarily used within a video game application, while also having a user account tied to a mobility provider, such as an airline. A digital locker can be a central database at which a user's virtual avatars, digital profiles/accounts, and the like can be accessible, thus enabling a passenger to select any such avatar/profile as representation within an in-flight shared virtual environment.

Using this application implemented by an IFE system onboard a commercial passenger vehicle, passengers are able to meet people that they would otherwise not likely meet, and have the opportunity in real-time to arrange further communication and interaction. Through security-oriented features of the application, passengers can opt in or opt out of the further communication and interaction. For example, a passenger that is unsatisfied with a virtual interaction is able to simply change their digital profile or avatar, and can pursue other virtual interactions in a secure/discrete manner. Previously used avatars can be indicated to a passenger prior to entering an in-flight virtual environment or world, so that the passenger can easily switch avatars on different journeys to further enhance anonymity and privacy. In some embodiments, an in-vehicle system restricts selection of a same avatar of a passenger's digital locker used in an immediately preceding travel segment. Passengers can also feel secure because cross-passenger interactions within the shared virtual environment may be purged at the end of a journey.

In some embodiments, the metaverse application enables passengers to create and/or modify passenger profiles for a travel segment. For example, a passenger creates a digital profile or avatar to use for socializing and interacting with other passengers for one travel segment, and the digital profile/avatar is deleted after the travel segment and before a subsequent travel segment. In some examples, a profile/avatar created during one travel segment is either modified or retained for another travel segment according to a rule or a passenger preference. For example, a passenger's use of the profile/avatar to virtually interact with other passengers can be evaluated to determine whether to retain or delete the profile/avatar. Example rules by which this evaluation can be performed can include retaining a profile/avatar for interacting with less than a threshold number of other passengers, retaining a profile/avatar based on an average sentiment or satisfaction score across interactions with other passengers, retaining a profile/avatar based on parsing a desire to retain the profile/avatar in communications with other passengers, and/or the like.

In some embodiments, the metaverse application can provide a means to let passengers share their interests and connect with each other while in flight prior to meeting in person. The metaverse application can provide visibility of other passengers with similar attributes, interests, journey parameters (e.g., same destination, same destination accommodations, reservations, activities), and the like according to respective anonymity levels selected by passengers. For example, virtual avatars corresponding to passengers with similar attributes can be congregated in or directed to certain areas within a shared virtual environment or world, thereby facilitating interaction between these passengers. In some embodiments, the metaverse application includes a social media platform by which different users are able to communicate with each other after the journey. The passengers with similar attributes may request contact information from one another during or following a flight. In some embodiments, personal attributes or contact information may include social media profiles or ways to contact others (e.g., passengers connected with before, after, or during a journey) on social media platforms. As a further example, the metaverse application provides a bulletin board via which passengers can advertise and publish their interests, goals, and objectives. Other passengers viewing the bulletin board can initiate contact with other passengers based on upon similar interests, goals, and objectives.

Various features implemented by example embodiments include:
- Discovery of other passengers with common itineraries and interests for the purpose of meeting. An in-vehicle system can congregate or direct passengers with such common itineraries/interests in areas within a virtual environment or world. The in-vehicle system can access a digital account or profile for a passenger to determine the itinerary for a passenger, including reservations, accommodations, activities, and/or the like that the passenger has arranged at a destination. An in-vehicle system can provide a bulletin board where passengers can advertise and publish their own itineraries or interests. An in-vehicle system can provide, within a shared virtual environment or world, features that simulate real-world experiences, and these features can be configured to be consumed or interacted with by multiple passengers within the shared virtual environment or world at a time. Passengers can discover others enjoying the same simulation features (e.g., a virtual tour of an amusement park, museum, or the like).
- Simulation Features. An in-vehicle system provides features related to various destinations of passengers onboard a vehicle. In some embodiments, an in-vehicle system loads features simulating real-world experiences for a set of destinations that is determined based on the itineraries of the passengers onboard the vehicle. These features can include interactive tours, videos, activities for points of interest at the set of destinations.
- Logistical Features. An in-vehicle system provides features related to passenger transportation, accommodation, reservation, and/or the like after a current journey (e.g., after an airplane lands, onboard a subsequent travel segment). These features can be located within a virtual environment or world and can be interactable by multiple passengers at a time, for example, for multiple passengers to coordinate ridesharing, shared lodging, and/or the like.
- Social Communication/Conversation: An in-vehicle system enables social communication/conversation between passengers via respective virtual avatars within the shared virtual environment. The virtual avatars for passengers can visually represent passengers in a text-based messaging application. The virtual avatars for passengers can visually represent passengers for a proximity-based voice communication within the shared virtual environment; for example, the passengers can move their virtual avatars and talk using voice with nearby virtual avatars. The virtual avatars for passengers can visually represent passengers in a video-based call or conference application; for example, a virtual avatar can be visually overlaid a passenger in a video stream for the video-based call or conference application to obscure and anonymize the passenger. These social communication/conversation features can be enjoyed by passengers in a casual or friendship context, in a professional context, a dating or romantic context, and/or the like.
- Travel Features. An in-vehicle system can provide features related to the current travel or journey of the commercial passenger vehicle. For example, a flight map can be provided in an immersive manner in an XR form of or XR feature within the shared virtual environment, to allow a passenger to fly around a virtual world and along a path of the vehicle. As a further example, the shared virtual environment can include an interior layout of the commercial passenger vehicle, a tour of the interior layout and/or other features of the commercial passenger vehicle, and/or the like.

In some embodiments, the metaverse application allows passengers to create their user profiles on the plane. The passenger profile will allow passenger to attach a photo of themselves either using a seatback monitor's built-in camera, or by using other means to transfer a photo of themselves to the IFE system. The passenger profile will allow passenger to provide their personal information like:
- Name
- Picture (optional)
- Seat number
- Where I'm going
- When I'm going
- What activity I'm planning to do at my destination

This profile information can be published to other passengers in a bulletin board-like fashion where passengers post information about themselves and their travel plans/intentions. In some embodiments, a passenger first makes a post describing him/herself, where they're going, when they're going and what activities they're planning to do. The initial post contents may be subject to airline configured censorship filtering based on pre-configured censored keywords. Other passengers see this post and can reply to show interest to meet. The original poster (OP) will get an alert when another passenger has responded to the original post. The OP has option to respond privately and reveal their seat number to have further conversations.

In some embodiments, the metaverse application can be integrated with other applications implemented by an IFE system, such as applications described by US Patent 11,518,517 titled "PREDICTIVE PREFERENCE SELECTION FOR IN-VEHICLE ENTERTAINMENT SYSTEMS" and filed on August 26, 2019, US Patent 11,492,119 titled "METHODS AND SYSTEM FOR STREAMING CONTENT ON A TRANSPORTATION VEHICLE" and filed on June 23, 2021, and US Patent 11,228,789 titled "VEHICLE ENTERTAINMENT SYSTEMS FOR COMMERCIAL PASSENGER VEHICLES" and filed on May 6, 2020, the contents of each of which being incorporated in their entirety by reference. For example, pre-populated passenger profile and itinerary can be accessed and used for providing an in-flight shared virtual environment and controlling anonymity and security of passenger avatars within the environment. For example, integration with these other applications can allow the passenger to use the same profile information over different flights. As a further example, integration with these other applications can enable recommendations for passengers to meet others with similar interests. Integrations with these and other applications that may be implemented by an IFE system can also enable recommendations for point-of-interests, restaurants, destinations, and/or the like.

Other integrations of the metaverse application with other applications can include integrating with a companion application implemented on a personal passenger device (e.g., a smartphone, a tablet, a laptop). A companion application can integrate user information into an in-flight shared virtual environment and can be used to take a picture used for a passenger profile.

In some embodiments, passengers can opt in to use and enjoyment of an in-flight shared virtual environment. In some embodiments, passengers who opt-in can view other passenger's profiles and be able to contact them within the in-flight shared virtual environment. This opt-in and consent by passengers can facilitate compliance with general data privacy requirements.

In some embodiments, passengers can use the metaverse application during a journey according to the following method:
1: A passenger takes an avatar image of themselves, or uses an avatar from the passenger's digital locker. Avatars from the passenger's digital locker can be retrieved based on the IFE system interfacing with other systems at which the avatars are hosted, including video game application systems, third-party systems, other metaverse systems or platforms, social media platforms, and/or the like. For example, the passenger imports or uses a digital persona associated with a social media platform (e.g., the passenger's Facebook^{™} profile, YouTube^{™} account, Instagram^{™} profile, and/or the like).
2: The passenger selects metaverse activities, or features within an in-flight shared virtual environment to participate in, interact with, consume, or the like. These activities can include video conferencing, navigating a virtual world, games, entertainment content (e.g., movies), and/or the like. These activities or features are configured to integrate the selected avatar or avatar image. In particular, these activities or features can integrate the selected avatar or avatar image in order to represent the passenger to other passengers enjoying the same activities or features, and/or to enhance the immersive enjoyment of these activities or features by the passenger.
3: The passenger specifies a level of participation in the metaverse activities. The level of participation can be one of passive (free), partially active (a limited number of free entries), fully active (daily, weekly, monthly subscription model), and/or the like.
4: The metaverse activities are operated. The metaverse activities can involve, in addition to the passenger, other passengers, third-party feature suppliers (e.g., movie producers, social media platforms), mobility providers (e.g., airlines, eVTOL operators, rideshare operators), and/or the like. Operation of the metaverse activities can include, subsequent to the journey concluding, the in-vehicle system synchronizing data records of the metaverse activities with other systems associated with the third-party feature suppliers, in order to facilitate sharing of profits according to a predetermined subscription model. According to some embodiments, the data records can be filtered, anonymized, redacted, and/or the like to preserve passenger anonymity and privacy.
5: The passenger stores or takes pictures of the metaverse activities while participating.
6: The passenger posts pictures of the metaverse activities on a social media platform (e.g., Facebook^{™}, YouTube^{™}, Instagram^{™}). The posting to a social media platform can be done within the in-flight shared virtual environment. In some embodiments, the passenger interacts with a feature within the in-flight shared virtual environment, and the interaction causes, subsequent to the conclusion of the journey, the in-vehicle system to synchronize with the social media platform to cause the pictures and/or other content to be posted by the passenger. The passenger posting pictures and/or other content on the social media platform can encourage and motivate others to participate in the metaverse application on their journeys on commercial passenger vehicles. For example, others on the social media platform would see the passenger enjoying the metaverse activities (such as virtually meeting other passengers), and develop an interest in respectively enjoying metaverse activities on their next journey. As part of the developed interest, the others on the social media platform can connect their digital persona on the social media platform (e.g., their social media account) for use in the metaverse activities on their next journey. For example, the others on the social media platform can make sure that their digital persona on the social media platform is included or connected to a passenger digital locker.

In addition to posting pictures, the passenger is able to connect with other passengers that are digitally present on the social media platform. For example, two passengers that virtually meet while participating in metaverse activities can then establish a connection between their respective digital personas or avatars on the social media platform.

In some embodiments, the passengers can exchange contact information based on connecting before, during ,or after a flight. The contact information may involve a social media platform by which different users (e.g., passengers one and two or multiple passengers) are able to communicate each other after the journey. For example, passengers may request contact information following a flight. In some embodiments, personal attributes/contact information may include profiles or ways to contact others (e.g., passengers before, after or during after the journey) on social media platforms.

7. Based on the level of participation, the passenger receives rewards. A record of the participation is contributed to the passenger's digital profile or digital persona in order to track reward progress. In some embodiments, the record is filtered, anonymized, redacted, and/or the like to remove identifiable information for other passengers, to preserve anonymity and privacy of those other passengers. The rewards that the passenger can receive based on participation in the metaverse activities can include discount tickets, discount services, discount beverages, airline frequent flyer miles, hotel loyalty points, video game points, and/or the like.

8. The passenger signs up for additional metaverse activities provided by third-parties within the in-flight shared virtual environment (e.g., a movie reviewing activity, consumption of talk shows or podcasts) and can achieve increased status based on additional participation in these additional activities.

In some embodiments, the metaverse application provides modifiable and immersive entertainment content. The entertainment content is modifiable to include virtual avatars for passengers who have selected the entertainment content (e.g., a movie) for consumption during the vehicle journey. A virtual avatar for a passenger can be inserted into a portion of visual content of a movie. This experience can be shared with other passengers. Together, passengers can represent themselves as virtual avatars within a mutually-selected movie as entertainment. Passenger activity via their virtual avatars inserted within a movie can be recorded in data records or data logs for the in-flight shared virtual environment. These data records or data logs can be anonymized and then shared with movie producers, theaters, and/or other third-party systems. In particular, anonymization of these data records or data logs can be based on the passengers being represented by virtual avatars characterized by a specified level of anonymity, or conveying only a certain set of personal attributes of the passengers.

In some embodiments, the metaverse application enables use of entertainment content as the virtual avatar for a passenger, and the metaverse application can share usage of the entertainment content with third-party services (e.g., movie producers, theaters) as feedback to guide movie development. For example, multiple passengers can choose Indiana Jones (or a virtual avatar styled as Indiana Jones) as their virtual avatar within the in-flight shared virtual environment, and state data for the in-flight shared virtual environment (or data records capturing states, usage, activities within the in-flight shared virtual environment) can be shared by the IFE system with third-party systems in an anonymized manner.

In some embodiments, the metaverse application includes shopping or retail features. These features allow passengers to try on items and merchandise virtually on their virtual avatar.

### Example Systems for In-Flight Shared Virtual Environments/Worlds

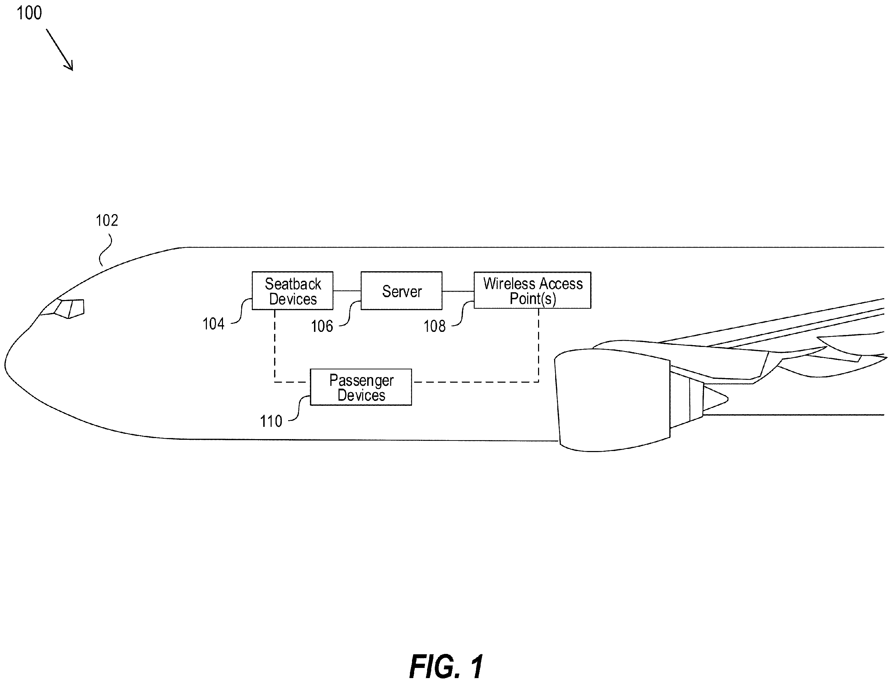

FIG. 1 shows an exemplary overview of an IFE system installed in an airplane 102. The IFE system includes a plurality of seatback devices 104 or seatback monitors. In some embodiments, the seatback devices 104 include an in-device terminal or computing unit. In some embodiments, the seatback devices 104 are communicably coupled to computing units (e.g., computers) that may be located in a seat below one or more seatback devices 104. For example, one or more seatback devices 104 located in a row in the airplane 102 may be communicable coupled to one computing unit located below a seat in the row. In another example, each seatback device 104 may be communicably coupled to a respective computing unit that is located in the seat where the seatback device 104 is located.

Each of the plurality of seatback devices 104 (or computing units to which the seatback devices 104 are coupled) may include an ethernet connector which allows the plurality of seatback devices 104 to be communicably coupled to a server 106 via, for example, an Ethernet switch. In some embodiments, the server 106 is configured to generate, provide, and operate an in-flight shared virtual environment, virtual world, virtual metaverse, and/or the like. For example, the server 106 stores immersive and virtually-generated visual content and implements an interactive user application in which virtual avatars can be operated by passengers. In some embodiments, the server 106 includes one or more processing units configured to implement example operations disclosed herein at least to provide the in-flight shared virtual environment and facilitate cross-passenger interactions and communications in a secure manner.

In some embodiments, the server 106 is communicably coupled (e.g., via Ethernet switch) to one or more wireless access points 108. Thus, in such embodiments, passengers may use passenger devices 110 (e.g., computers, laptops, mobile phones, tablets, XR devices such as head-mounted display devices) to connect to the one or more wireless access points 108 so that the passenger devices 110 can communicate with the plurality of seatback devices 104 via the server 106. In some embodiments, a passenger may operate one or more passenger devices 110 (e.g., smartphones, laptops, tablets, communication devices, entertainment devices) while on-board the vehicle, and the passenger devices 110 of a passenger is connected to a seatback device 104 and/or the server 106 of the IFE system.

In some embodiments, each of the plurality of seatback devices 104 is configured such that a passenger device 110 can directly communicate with a seatback device 104 (or a computing unit to which the seatback device 104 is coupled). For example, each seatback device 104 is configured for Bluetooth or Bluetooth Low Energy (BLE) communication with passenger devices 110. Accordingly, a seatback device 104 is configured to detect nearby candidate passenger devices, establish a connection or pairing with a passenger device 110, and transmit/receive data via the connection or pairing with the passenger device 110. In some examples, a seatback device 104 is configured for direct communication with passenger devices 110 via other means, such as a near-field communication (NFC) device via which a passenger device 110 directly communicates with the seatback device 104. In some embodiments, visual and audio content related to an in-flight shared virtual environment generated and provided by the server 106 can be displayed to a passenger via one or more of a passenger device 110 and a seatback device 104.

While FIG. 1 illustrates an example of an aircraft, embodiments disclosed herein are applicable to other commercial passenger vehicles. For example, embodiments disclosed herein enable passengers on a train to interact and communication with one another in a virtual and anonymized/secure manner via an in-flight or in-journey shared virtual environment.

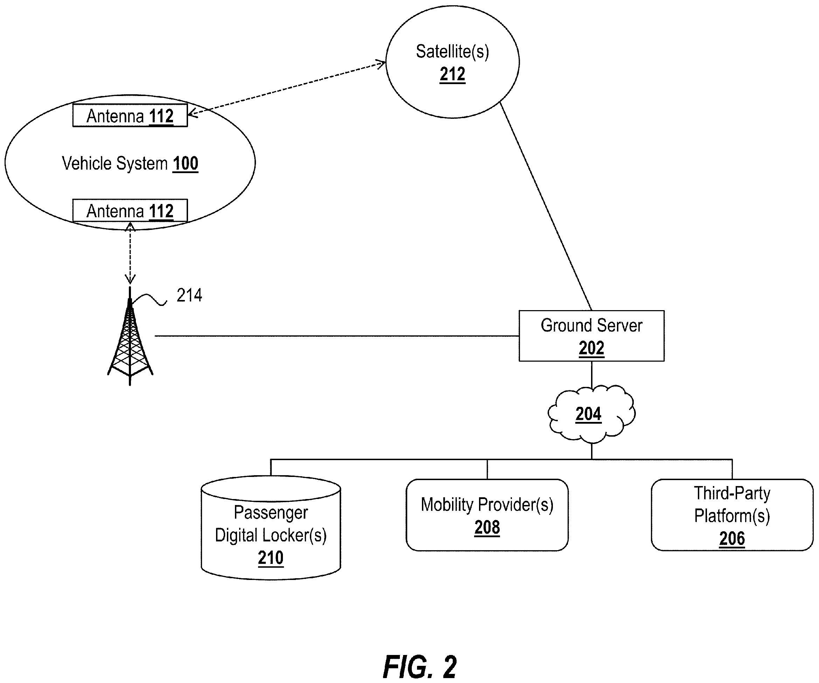

FIG. 2 shows an example system for data gathering, processing, and usage for providing an in-flight shared virtual environment/world/metaverse and facilitating secure and/or anonymous interactions and communications between passengers in said environment/world/metaverse. In particular, FIG. 2 shows a communication network in which information can be obtained by a vehicle system 100 (e.g., the vehicle system 100 shown and described with FIG. 1) that includes in-vehicle and onboard system(s) (e.g., server(s)) for providing the in-flight shared virtual environment to passengers.

According to example embodiments, a ground server 202 obtains information for generating and providing an in-flight shared virtual environment. In some embodiments, the ground server 202 obtains the information based on creating a copy or synchronizing with an existing metaverse provided by a third-party platform or service. In doing so, example embodiments provide an in-flight shared virtual environment that is a localized instance, offline instance, and/or quarantined instance of the existing metaverse, and user states and user data within the existing metaverse can be replicated to the in-flight shared virtual environment provided to passengers onboard the vehicle system 100. In some embodiments, the ground server 202 and/or the vehicle system 100 store data for instantiating an in-flight shared virtual environment that is not related to other third-party metaverse worlds; for example, the ground server 202 is configured to generate a seed world, a shell world, a template world, and/or the like to provide to the vehicle system 100. In some embodiments, the ground server 202 obtains other information related to the in-flight shared virtual environment, such as audio/visual data and content for third-party features and experiences provided within the in-flight shared virtual environment.

As illustrated, the ground server 202 may obtain information for generating and providing an in-flight shared virtual environment via a network 204 (e.g., the Internet) from third-party platforms 206, mobility providers 208, and passenger digital lockers 210, digital profiles, or the like. In some embodiments, the third-party platforms 206 include online applications, web applications, server applications, platforms, and/or the like for metaverse avatar generation/retrieval/subscription, for video conferencing, for gaming, for marketing, and/or the like. For example, the ground server 202 obtains metaverse features defined by third-party platforms 206 related to amusement features, destination activities, marketing or retail experiences, and/or the like. In some embodiments, the ground server 202 communicates via the network 204 with mobility providers 208 that may operate other commercial passenger vehicles, in order to obtain passenger profile information. For instance, a given passenger may have profile data associated with multiple of the mobility providers 208 (e.g., airlines, ridesharing operators, eVTOL operators), and these profile data for the given passenger can be collected and processed by the ground server 202 for the given passenger's experience in the virtual metaverse. In some examples, the ground server 202 communicates via the network 204 with mobility providers 208 to enable creation of a multi-vehicle virtual metaverse in which passengers onboard different vehicles operated by the mobility providers 208 can participate.

The ground server 202 may, via the network 204, interface with passenger digital lockers 210 to facilitate meta-avatar or virtual avatar use by passengers in the in-flight shared virtual environment. A passenger digital locker 210 for a given passenger represents a collection of digital personas, profiles, accounts, avatars, and/or the like used by the given passenger in digital spaces. For example, a given passenger may be associated with a customized video game avatar operated by the given passenger within a video game application, a frequent flyer online profile or account, a social media account, and these digital representations can be virtually stored in a passenger digital locker 210. In some embodiments, the passenger digital locker 210 may be a database, a data structure, a data entity, a data platform, and/or the like that enables retrieval of, access to, and/or interfacing with (e.g., by the ground server 202) these digital representations of a passenger or user. Some of the digital representations of a passenger that are "stored" in a passenger digital locker 210 may be associated third-party platforms 206. For example, the passenger digital locker 210 may store references to interfaces (e.g., application programming interfaces (APIs)) for a third-party platform 206, such that a ground server 202 can discover and then retrieve a digital representation or virtual avatar associated with the third-party platform 206.

In some examples, the ground server 202 may communicate the information with one or more satellites 212 (e.g., via a satellite dish), and the information is in turn received in the vehicle system 100 (e.g., by an onboard server 106) via an antenna 112 onboard the commercial passenger vehicle. The vehicle system 100 (e.g., the onboard server 106) may implement various embodiments described herein, to generate and provide an in-flight shared virtual environment using the information communicated by the ground server 202 (e.g., seed data for generating a virtual world, data for instantiating a copy of a third-party metaverse world, audio/visual content for third-party features). Alternatively, or additionally, the ground server 202 may communicate the information to the vehicle system 100 through a terrestrial connection such as through cellular communication via a cellular network 214 to an antenna 112 onboard the commercial passenger vehicle that is configured for cellular reception. In some embodiments, the connectivity between the ground server 202 and airplane equipment may be based on a local area wireless network (e.g., a Wi-Fi access point) or a cellular communication network (e.g., cell tower) which may be available to the vehicle system 100 for communication while during a flight or when parked at an airport terminal, near the gate area. The vehicle system 100 may perform the example techniques and operations disclosed in the present document using the information communicated from the ground server 202 in real-time (e.g., using the example satellite communication path depicted in FIG. 2) or offline such as communicating with the ground server 202 at the beginning and/or end of a travel segment.

Similar to the server systems onboard the aircraft described above, the ground server is understood to be a standalone computer system, or multiple standalone computer systems with general purpose data processors, memory, secondary storage, and/or a network interface device for connecting to each other. The computer systems may have an operating system installed thereon, along with the server applications that implement the various components of the system for generating and providing an in-flight shared virtual environment. The ground server may interface with third-party platforms 206, mobility providers 208, and passenger digital lockers 210 and aggregate and collect information needed by the vehicle system 100 to generate and provide the in-flight shared virtual environment.

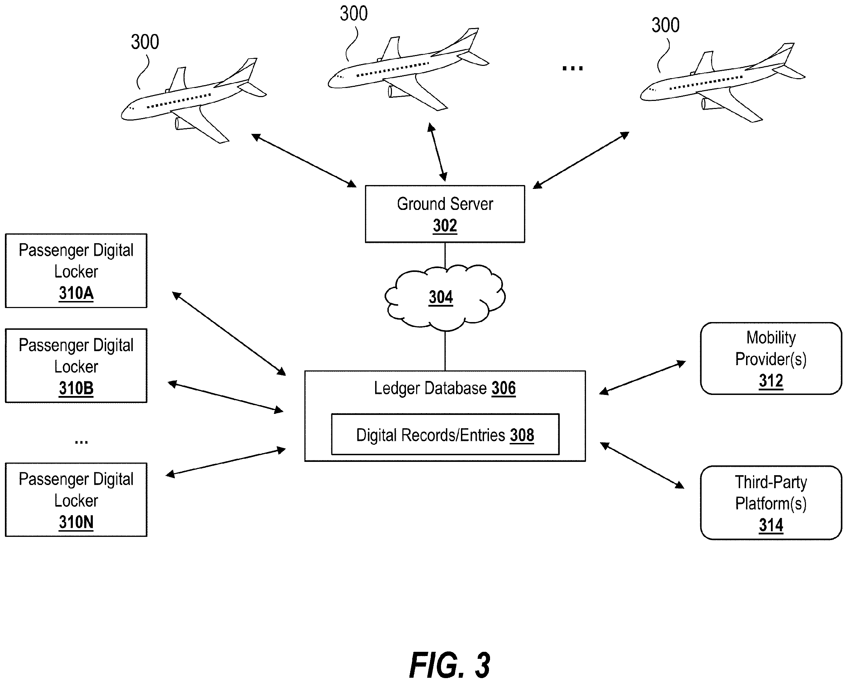

FIG. 3 shows an exemplary system in which a ground server 302 communicates with vehicles 300 (or vehicle systems onboard the vehicles 300) to exchange data related to in-flight shared virtual environments. FIG. 3 also illustrates an example configuration by which the ground server 302 interfaces with passenger digital lockers to provide virtual avatar information to the vehicles 300.

According to FIG. 3, the ground server 302 can communicate with multiple vehicles 300 to support the provision of in-flight shared virtual environments at the vehicles 300. The ground server 302 may communicate with each of the vehicles 300 via satellite connection, direct communication links, cellular networks, local area networks, and/or the like. A vehicle 300 may establish connection with the ground server 302 at certain points or stages of a travel segment or journey. For example, a vehicle 300 may connect with the ground server 302 at a pre-journey stage and a post-journey stage, but in some examples, the vehicle 300 may not be connected with the ground server 302 while undertaking the journey (e.g., a flight). Accordingly, in some examples, the vehicle 300 (or its vehicle systems including onboard server(s)) may, upon re-establishing connection with a ground server 302 after or at an end of a journey, synchronize data with the ground server 302 to inform the ground server 302 of transactions and any relevant actions undertaken during the journey. However, according to example embodiments, the data synchronized with the ground server 302 can omit personal information related to passenger activities within an in-flight shared virtual environment, and in particular, those activities pertaining to interactions/communications between passengers.

The ground server 302 can provide data to vehicles 300 that the ground server 302 obtains via a network 304 from a ledger database 306. The ledger database 306 stores digital records 308 or entries pertaining to multi-party information related to passengers onboard the vehicles 300. In some embodiments, the ledger database 306 is a distributed cryptographic consensus-based database, such as a blockchain. In particular, in some embodiments, the digital records 308 embody passenger digital lockers (e.g., 310A, 310B, 310N) for passengers onboard the vehicles 300 or metaverse users. For example, a digital record 308 of the ledger database 306 stores attributes of a virtual avatar that may be owned by a passenger, a third-party provider, a mobility provider, and/or the like. These attributes can be modified in the ledger database 306. The ledger database 306 also enables transaction or changes in ownership for virtual avatars or digital representations for passengers within virtual metaverses. Thus, in some embodiments, a passenger digital locker 310 (e.g., 310A, 310B, 310N) for a user may be a digital wallet or personal identifier associated with the user and that is used by the ledger database 306 to indicate ownership by the user of certain virtual avatars stored in the ledger database 306.

As discussed, embodiment of passenger digital lockers using a ledger database 306 enables universal modification and application of a passenger's multiple virtual avatars or digital representations in multiple platforms, including in-flight shared virtual environments. In some examples, a passenger can make modifications to a virtual avatar owned by the passenger via an in-vehicle system of a first vehicle. These modifications can be communicated to the ground server 302, which can apply these modifications in the ledger database 306. Accordingly, with these modifications being applied, other platforms can access the ledger database 306 to provide the modified and up-to-date virtual avatar for the passenger in the other platforms, such as other vehicles (including vehicles operated by other mobility providers 312) and third-party platforms 314 (e.g., social media platforms, video game platforms). Likewise, a ground server 302 can accurately retrieve virtual avatars used with other third-party platforms 314 and/or mobility providers 312 using the ledger database 306.

### Example Operations for In-Flight Shared Virtual Environments/Worlds

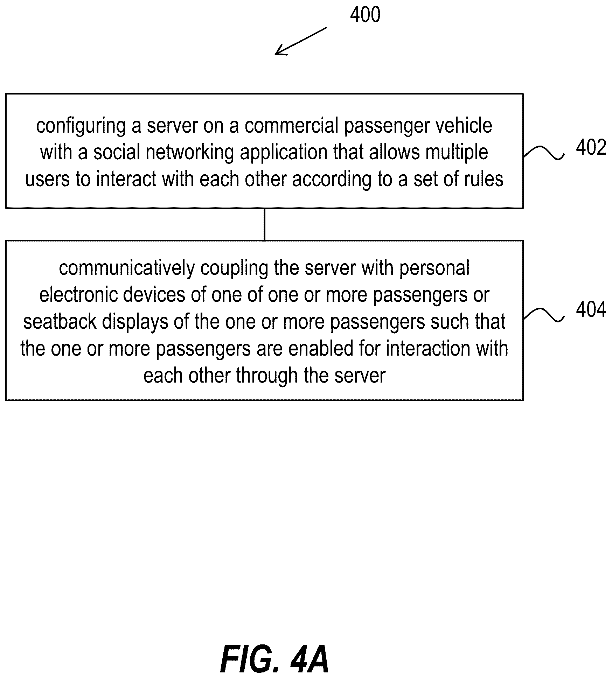

FIGs. 4A-4B are flow diagrams illustrating example operations performed to generate and provide an in-flight shared virtual environment configured to facilitate secure and/or anonymized interactions and communications between passengers onboard a commercial passenger vehicle.

Referring first to FIG. 4A, an example method 400 can be implemented by a mobile platform (e.g., an in-vehicle connectivity system, an in-vehicle edge network, an in-flight entertainment system, and/or the like) to provide its passengers access to and operation within an in-flight shared virtual environment. At block 402, the mobile platform configures a server on a commercial passenger vehicle with a social networking application that allows multiple users to interact with each other according to a set of rules. At block 404, the mobile platform communicatively coupling the server with personal electronic devices of one of one or more passengers or seatback displays of the one or more passengers such that the one or more passengers are enabled for interaction with each other through the server. In some embodiments, the set of rules specifies that each passenger is anonymized based on an online avatar selected by the passenger. In some embodiments, the set of rules is specified by a mobility provider for the commercial passenger vehicle, such as one or more airlines operating the commercial passenger vehicle and other vehicles. In some embodiments, the mobile platform uses an application programming interface (API) and/or a software development kit (SDK) to configure the server with the social networking application.

In some embodiments, a method implemented by a ground server that is configured to communicatively couple with an in-flight entertainment server includes: receiving, by the ground server, indications of interest for onboard social media participation by multiple passengers on a flight; and communicating the indications to the in-flight entertainment server such that the in-flight entertainment server hosts a social media interaction between the multiple passengers during the flight.

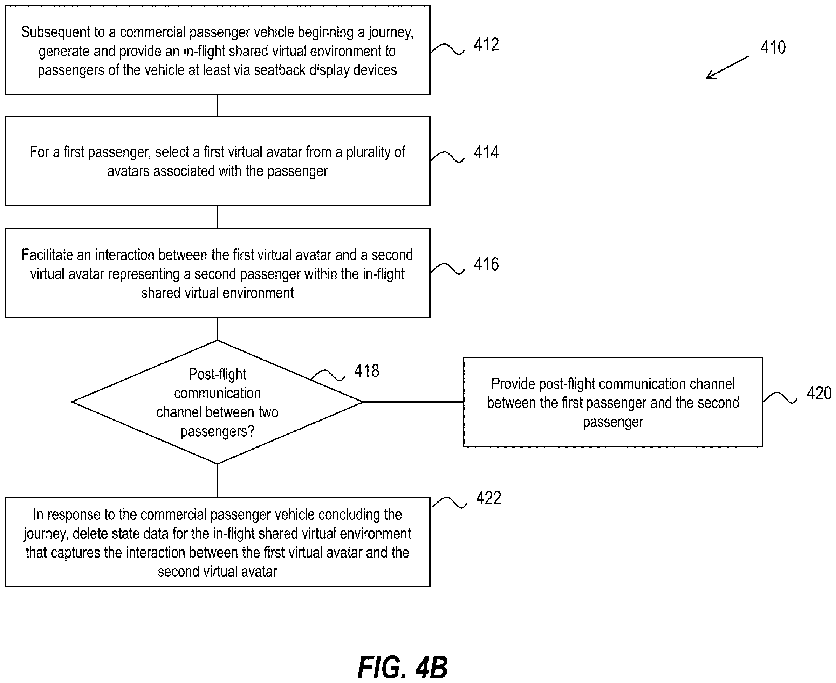

Turning now to FIG. 4B, an example method 410 can be implemented by a mobile platform (e.g., an in-vehicle connectivity system, an in-vehicle edge network, an in-flight entertainment system, and/or the like). At block 412, subsequent to a commercial passenger vehicle beginning a journey, a mobile platform or in-vehicle system onboard the commercial passenger vehicle generates and provides an in-flight shared virtual environment to passengers of the vehicle at least via seatback display devices. The mobile platform can operate the seatback display devices to display visual content and/or audio content for the in-flight shared virtual environment, such as a bulletin board, a chatting or messaging application, a virtual world, and/or the like.

At block 414, for a first passenger, the mobile platform selects a first virtual avatar from a plurality of avatars associated with the passenger. The plurality of avatars associated with the passenger can be a digital locker accessed by the mobile platform. The first virtual avatar can be selected by the first passenger (e.g., based on user input on a personal electronic device and/or a seatback display device) and/or by the mobile platform. For example, the first passenger can specify a desired anonymity level, and the mobile platform can select a first virtual avatar that conveys a number of personal attributes of the first passenger that complies with or satisfies the desired anonymity level.

In some embodiments, the mobile platform determines or evaluates an anonymity level for a virtual avatar using profile data associated with the passenger. For example, the mobile platform determines whether a virtual avatar conveys (e.g., visually) demographic attributes of the passenger according to the profile data associated with the passenger. As a further example, the mobile platform can determine whether a virtual avatar conveys (e.g., visually) physical attributes of the passenger based on other digital representations or virtual avatars associated with the passenger. For instance, the passenger takes a picture of themselves, and an anonymity level of a virtual avatar can be determined based on whether physical attributes identified in the picture also appear in the visual representation of the virtual avatar. For instance, the picture taken by the passenger may be characterized by a low anonymity level, while a video game character created by the passenger to have opposite visual features (e.g., color, size) can be characterized by a high anonymity level.

At block 416, the mobile platform facilitates an interaction between the first virtual avatar and a second virtual avatar representing a second passenger within the in-flight shared virtual environment. In some embodiments, the interaction may be facilitated based on the mobile platform determining that the first passenger and the second passenger have common attributes, goals, journey parameters (e.g., destination, accommodations, travel interests), and/or the like, and the mobile platform can explicitly and/or implicitly encourage the interaction between the first passenger and the second passenger via their avatars.

At decision point 418, the mobile platform determines whether to facilitate a post-flight or post-journey communication channel between the two passengers. In some examples, the two passengers may enjoy their interaction and wish to continue interacting/communicating after the flight, journey, or travel segment. At least one of the two passengers may indicate this desire to the mobile platform. In some embodiments, the mobile platform requires affirmative indications from both the first passenger and the second passenger for a post-flight communication channel. In some embodiments, the mobile platform predicts, for example using a sentiment analysis model, a natural language processing model, a prediction/classification machine learning model, and/or the like, whether the two passengers are likely to continue communication/interaction.

The method 410 may proceed to block 420 if the mobile platform determines to facilitate the post-flight communication channel between the two passengers, and at block 420, the mobile platform facilitates the post-flight communication channel. The post-flight communication channel may include personal contact information being distributed to each of the two passengers. In some examples, the post-flight communication channel includes retaining a record of the interactions/communications between the two passengers, such that the mobile platform can push or synchronize the record to another metaverse or platform where the two passengers can continue their interactions/communications. In some examples, the post-flight communication channel includes a sharing of seat numbers or in-vehicle locations between the two passengers, so that the two passengers can meet in real-life. For example, in a metaverse world of the in-flight shared virtual environment, seat numbers can be visually indicated with the passengers' virtual avatars. In some examples, the post-flight communication channel includes sharing a subsequent travel segment between the two passengers, such that the two passengers can arrange a real-life meet up.

The method 410 may proceed to block 422 if the mobile platform determines that a post-flight communication channel should not be facilitated between the two passengers. Accordingly, at block 422, the mobile platform deletes state data (or data records/logs) for the in-flight shared virtual environment that records or captures the interaction between the two passengers. Similarly, the mobile platform can decline to synchronize the state data with a ground server or other platforms. In some embodiments, the mobile platform may not delete the state data, but can archive the state data to prevent use thereof (e.g., in another in-flight virtual metaverse, in another IFE system to provide recommended content) subsequent to the journey. In some embodiments, the mobile platform processes the state data to anonymize, de-contextualize, and/or the like the state data based on removing personal attributes or identifiers captured in the state data and removing indications of an interaction or communication between passengers.

In some embodiments, the mobile platform flags the state data if it determines that personal attributes and/or cross-passenger interactions/communications are captured in the state data. The mobile platform may then store the flagged state data, for example, in the ledger database that is accessible by other mobility providers (e.g., airlines, eVTOL operators, ridesharing operators) and third-party service providers. The flagging of the state data indicates to these other parties that the state data includes personal and sensitive information. These other parties can evaluate whether to incorporate or use the state data (e.g., in a respective in-flight shared virtual environment, in providing content in a respective IFE system) based on passenger profile preferences or settings (e.g., a passenger has indicated a desire for virtual interactions and personal attributes to persist to other virtual metaverses), based on a security risk, and/or the like. For example, the journey can include, at preflight gate(s), flight(s), at arrival gate(s), post flight, transferring securely the state data to the digital locker of the passengers that is accessible by passengers, third-party services, other mobility providers, and/or the like who can see if there is enough in common or if there is no security risk.

Any one or more of these actions can be referred to as a security processing of the state data, as these actions can be performed to maintain a security, privacy, and/or anonymity of passenger information as used and applied within the in-flight shared virtual environment.

In some embodiments, the mobile platform deletes the state data (or processes, archives, anonymizes, locally stores, restricts from further use, and/or the like) at an end of the journey of the commercial passenger vehicle. In some embodiments, the mobile platform performs this processing of state data at a pre-flight stage, at a pre-flight gate/terminal/station, at any of various stages during a flight (e.g., mid-flight), at an arrival or destination gate/terminal/station, and/or the like.

### Example Computing Systems

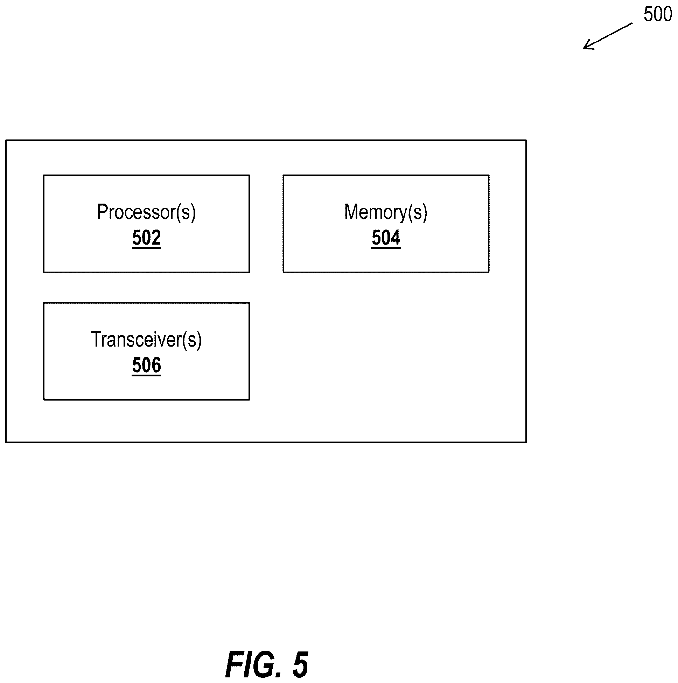

FIG. 5 illustrates an example of a computing system 500 that implements various embodiments disclosed herein. For example, the computing system 500 is embodied by a central computing system that performs the techniques described herein. The computing system 500 thus can perform examples techniques and operations disclosed herein relating to generating and providing an in-flight shared virtual environment configured to facilitate secure and/or anonymized interactions and communications between passengers onboard a commercial passenger vehicle.

In FIG. 5, the computing system 500 includes at least one processor 502 and a memory 504 having instructions stored thereupon. The memory 504 may store instructions to be executed by the processor 502. In other embodiments, additional, fewer, and/or different elements may be used to configure the computing system 500. The memory 504 is an electronic holding place or storage for information or instructions so that the information or instructions can be accessed by the processor 502. The memory 504 can include, but is not limited to, any type of random-access memory (RAM), any type of read-only memory (ROM), any type of flash memory, etc. Such as magnetic storage devices (e.g., hard disk, floppy disk, magnetic strips, etc.), optical disks (e.g., compact disk (CD), digital versatile discs (DVD), etc.), smart cards, flash memory devices, etc. The instructions upon execution by the processor 502 configure the computing system 500 to perform the example operations described in this patent document.

The instructions executed by the processor 502 may be carried out by a special purpose computer, logic circuits, or hardware circuits. The processor 502 may be implemented in hardware, firmware, software, or any combination thereof. The term "execution" is, for example, the process of running an application or the carrying out of the operation called for by an instruction. The instructions may be written using one or more programming language, scripting language, assembly language, etc. By executing the instruction, the processor 502 can perform the operations called for by that instruction. The processor 502 operably couples with the memory 504 and transceiver 506 to receive, to send, and to process information and to control the operations of the computing system 500. The processor 502 may retrieve a set of instructions from a permanent memory device such as a ROM device and copy the instructions in an executable form to a temporary memory device that is generally some form of RAM. In some implementations, the computing system 500 can include a plurality of processors that use the same or a different processing technology.

The transceiver 506 transmits and receives information or data to another device. The transceiver 506 can transmit and receive signals over different networks, including Wi-Fi networks, cellular networks, in-flight connectivity or edge networks, satellite networks, and/or the like. The transceiver 506 may be comprised of a transmitter and a receiver; in some embodiments, the computing system 500 comprises a transmitter and a receiver that are separate from another but functionally form a transceiver.

### Example Technical Solutions

Some preferred embodiments of the present disclosure implement the following solutions.
1. A method comprising: subsequent to a commercial passenger vehicle departing on a journey, generating a shared virtual environment that is accessible and traversable by passengers of the commercial passenger vehicle at least in part via seatback display devices located within the commercial passenger vehicle, wherein the shared virtual environment comprises at least one interactable virtual feature related to a destination of the journey or an interior layout of the commercial passenger vehicle; for a first passenger of the commercial passenger vehicle requesting entry into the shared virtual environment, select a first virtual avatar from a plurality of virtual avatars associated with the first passenger, the first virtual avatar being configured to convey a number of personal attributes of the first passenger according to an anonymity level indicated by the first passenger; operate the shared virtual environment to facilitate a virtual interaction between the first virtual avatar associated with the first passenger and a second virtual avatar that represents a second passenger of the commercial passenger vehicle, wherein the virtual interaction and the personal attributes conveyed by the first virtual avatar are captured by state data for the shared virtual environment that is locally stored onboard the commercial passenger vehicle; and in response to the commercial passenger vehicle concluding the journey, delete the state data capturing the virtual interaction and the personal attributes conveyed by the first virtual avatar.
2. A method comprising: providing, by an IFEC system onboard a commercial passenger vehicle to passengers of the commercial passenger vehicle, access to a shared virtual environment that comprises at least one interactable virtual feature related to a destination of a journey of the commercial passenger vehicle or an interior layout of the commercial passenger vehicle; for a first passenger, selecting a first virtual avatar from a set of virtual avatars linked to profile data associated with the first passenger, the first virtual avatar being configured to represent a set of personal attributes of the first passenger within the shared virtual environment based on an anonymity level that characterizes the first virtual avatar; detecting, within the shared virtual environment, a virtual interaction between the first virtual avatar and a second virtual avatar representing personal attributes of a second passenger, wherein the virtual interaction is captured by data logs that are generated by the IFEC system during operation of the shared virtual environment; and subsequent to the commercial passenger vehicle arriving to the destination of the journey, deleting at least a portion of the data logs that relates to the virtual interaction.
3. A method comprising: subsequent to a commercial passenger vehicle departing on a journey, generating an in-flight virtual environment that is accessible by passengers of the commercial passenger vehicle, the in-flight virtual environment being synchronized from a ground-based platform that provides a shared virtual environment; selecting a first virtual avatar from a plurality of virtual avatars associated with the first passenger to represent the first passenger within the in-flight virtual environment, the first virtual avatar being configured to represent the first passenger according to an anonymity level; facilitating, within the shared virtual environment, a virtual interaction between the first virtual avatar representing the first passenger and a second virtual avatar representing a second passenger of the commercial passenger vehicle; and subsequent to re-establishing connection to the ground-based server system at an end of the journey, declining to synchronize the virtual interaction with the ground-based server system, such that the ground-based server system has no record of the virtual interaction when providing the shared virtual environment.
4. The method of any one of solutions 1-3, further comprising: receiving, at a time during or subsequent to the virtual interaction, a request for a post-journey communication channel between the first passenger and the second passenger; providing, in response to the request, the post-journey communication channel based on transmitting, to a personal electronic device operated by one of the first passenger or the second passenger, contact information (e.g., phone numbers, social media profiles, digital accounts) for another one of the first passenger or the second passenger; and at least one of (i) indicating, to each of the first passenger and the second passenger, an in-vehicle location for each of the first passenger and the second passenger via the at least one interactable virtual feature related to the interior layout of the commercial passenger vehicle, or (ii) transmitting to a personal electronic device operated by one of the first passenger or the second passenger, contact information for another one of the first passenger or the second passenger.
5. The method of any one of solutions 1-4, further comprising: determining a likelihood that the first passenger and the second passenger will request a post-journey communication channel based on the virtual interaction between the first virtual avatar and the second virtual avatar; and in response to the likelihood being greater than a threshold, sharing the state data that captures the virtual interaction to a second shared virtual environment that is accessible outside of the commercial passenger vehicle to enable the second shared virtual environment to resume the virtual interaction subsequent to the commercial passenger vehicle concluding the journey.
6. The method of any one of solutions 1-5, further comprising: based on analyzing the virtual interaction, querying the first passenger to use a different virtual avatar from the plurality of virtual avatars, the different virtual avatar being configured to convey a fewer number of personal attributes based on being associated with a higher anonymity level relative to the first virtual avatar.
7. The method of any one of solutions 1-6, further comprising: subsequent to the commercial passenger vehicle concluding the journey, storing, in profile data associated with the first passenger, an indication that the first virtual avatar was used during the journey, wherein the indication is configured to be provided to the first passenger prior to a second journey by the first passenger.
8. The method of any one of solutions 1-7, wherein the virtual interaction comprises the first passenger and the second passenger participating in a movie experience in which a mutually-selected movie is modified to include the first virtual avatar and the second virtual avatar with visual content of the mutually-selected movie.
9. The method of any one of solutions 1-8, wherein the plurality of virtual avatars associated with the first passenger comprises a particular virtual avatar associated with a different shared virtual environment, and wherein the method further comprises: receiving, from the first passenger, a request to modify attributes of the particular virtual avatar; and transmitting, to a system operating the different shared virtual environment, an indication of the request to modify the particular virtual avatar.
10. The method of any one of solutions 1-9, wherein each seatback display device is uniquely associated with a different passenger of the commercial passenger vehicle, wherein the shared virtual environment is visually provided to the first passenger of the commercial passenger vehicle via both a corresponding seatback display device and one or more personal electronic devices operated by the first passenger, and wherein the method further comprises: receiving the anonymity level indicated by the first passenger via one of the corresponding seatback display device or the one or more personal electronic devices.
11. The method of any one of solutions 1-10, wherein the one or more personal electronic devices comprises a virtual reality head-mounted display device that is communicably coupled with a corresponding seatback display device.
12. The method of any one of solutions 1-11, further comprising: identifying, using the profile data associated with the first passenger, a recommended passenger to meet via the shared virtual environment; and indicating, within the shared virtual environment via one of a seatback monitor or a personal electronic device operated by the first passenger, the recommended passenger.
13. The method of any one of solutions 1-12, further comprising: during the operation of the shared virtual environment, grouping a set of virtual avatars being operated by a set of passengers into an area within the shared virtual environment based on the set of virtual avatars having a common anonymity level.
14. The method of any one of solutions 1-13, wherein the anonymity level is one of a plurality of anonymity levels, at least one of which includes a given virtual avatar for a given passenger visually indicating a vehicle seat number of the given passenger.
15. The method of any one of solutions 1-14, further comprising: evaluating a respective anonymity level that characterizes each of the plurality of virtual avatars based on profile data associated with the first passenger, wherein the first virtual avatar is selected based on the respective anonymity level characterizing the first virtual avatar satisfying the anonymity level indicated by the first passenger.
16. The method of any one of solutions 1-15, wherein the in-flight virtual environment comprises a bulletin board via which the first passenger provides an invitation for virtual interactions with other passengers of the commercial passenger vehicle, wherein the virtual interaction is facilitated based on the second passenger viewing the invitation by the first passenger via the bulletin board.
17. The method of any one of solutions 1-16, wherein the shared virtual environment is generated to be further accessible by passengers of at least one other commercial passenger vehicle, the at least one other commercial passenger vehicle and the commercial passenger vehicle being operated by a common mobility provider.
18. A computing system comprising at least one processor and at least one memory storing instructions that, when executed by the at least one processor, cause the computing system to perform the method of any of solutions 1-17.
19. A non-transitory computer-readable medium storing instructions that, when executed by a processor, cause the processor to perform the method of any of solutions 1-17.

The above description and drawings are illustrative and are not to be construed as limiting. Numerous specific details are described to provide a thorough understanding of the disclosure. However, in certain instances, well-known details are not described in order to avoid obscuring the description. Further, various modifications may be made without deviating from the scope of the embodiments.

As used herein, unless specifically stated otherwise, terms such as "processing," "computing," "calculating," "determining," "displaying," "generating," or the like, refer to actions and processes of a computer or similar electronic computing device that manipulates and transforms data represented as physical (electronic) quantities within the computer's memory or registers into other data similarly represented as physical quantities within the computer's memory, registers, or other such storage medium, transmission, or display devices.

Reference herein to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

The terms used in this specification generally have their ordinary meanings in the art, within the context of the disclosure, and in the specific context where each term is used. Certain terms that are used to describe the disclosure are discussed above, or elsewhere in the specification, to provide additional guidance to the practitioner regarding the description of the disclosure. For convenience, certain terms may be highlighted, for example using italics and/or quotation marks. The use of highlighting has no influence on the scope and meaning of a term; the scope and meaning of a term is the same, in the same context, whether or not it is highlighted. It will be appreciated that the same thing can be said in more than one way.

Consequently, alternative language and synonyms may be used for any one or more of the terms discussed herein, nor is any special significance to be placed upon whether or not a term is elaborated or discussed herein. Synonyms for certain terms are provided. A recital of one or more synonyms does not exclude the use of other synonyms. The use of examples anywhere in this specification including examples of any term discussed herein is illustrative only and is not intended to further limit the scope and meaning of the disclosure or of any exemplified term. Likewise, the disclosure is not limited to various embodiments given in this specification.

Without intent to further limit the scope of the disclosure, examples of instruments, apparatus, methods and their related results according to the embodiments of the present disclosure are given above. Note that titles or subtitles may be used in the examples for convenience of a reader, which in no way should limit the scope of the disclosure. Unless otherwise defined, all technical and scientific terms used herein have the same meaning as commonly understood by one of ordinary skill in the art to which this disclosure pertains. In the case of conflict, the present document, including definitions will control.

From the foregoing, it will be appreciated that specific embodiments of the invention have been described herein for purposes of illustration, but that various modifications may be made without deviating from the scope of the invention. Accordingly, the invention is not limited except as by the appended claims.

From the foregoing, it will be appreciated that specific embodiments of the invention have been described herein for purposes of illustration, but that various modifications may be made without deviating from the scope of the invention. Accordingly, the invention is not limited except as by the appended claims.

## Claims

1. A method comprising:
providing, by an in-flight entertainment and communication (IFEC) system onboard a commercial passenger vehicle to passengers of the commercial passenger vehicle, access to a shared virtual environment;
determining an anonymity level specified for a first passenger in the shared virtual environment;
for a first passenger, selecting a first virtual avatar from a set of virtual avatars linked to profile data associated with the first passenger, the first virtual avatar being configured to represent a set of personal attributes of the first passenger within the shared virtual environment based on the anonymity level;
detecting, within the shared virtual environment, a virtual interaction between the first virtual avatar and a second virtual avatar representing a second passenger, wherein the virtual interaction is captured by data logs that are generated by the IFEC system during operation of the shared virtual environment;
determining a likelihood that the first passenger and the second passenger will request a post-journey communication channel based on the virtual interaction between the first virtual avatar and the second virtual avatar; and
in response to the likelihood failing to satisfy a threshold, restricting communication of the virtual interaction during a transmission of the data logs to a ground-based database, wherein restriction communication of the virtual interaction comprises at least one of deleting the virtual interaction from the data logs, declining to synchronize the data logs with the ground-based database, archiving the data logs, or performing a security processing of the data logs.

2. The method of claim 1, wherein the likelihood is determined to fail to satisfy the threshold based on at least one of the first passenger or the second passenger indicating a desire not to continue communicating subsequent to the commercial passenger vehicle arriving to a destination of the journey.

3. The method of any one of claims 1-2, wherein detecting the virtual interaction further comprises determining whether the virtual interaction included a communication of personal attributes or information.

4. The method of any one of claims 1-3, wherein restricting communication of the virtual interaction comprises flagging the data logs during the transmission, the flagging indicating the presence of personal information being included in the data logs.

5. The method of any one of claims 1-4, further comprising:
based on analyzing the virtual interaction, querying the first passenger to use a different virtual avatar from the set of virtual avatars, the different virtual avatar being configured to convey a fewer number of personal attributes based on being associated with a higher anonymity level relative to the first virtual avatar.

6. The method of any one of claims 1-5, further comprising:
subsequent to the commercial passenger vehicle concluding the journey, storing, in the profile data associated with the first passenger, an indication that the first virtual avatar was used during the journey, wherein the indication is configured to be provided to the first passenger prior to a second journey by the first passenger.

7. The method of any one of claims 1-6, wherein the set of virtual avatars associated with the first passenger comprises a particular virtual avatar associated with a different shared virtual environment, and wherein the method further comprises:
receiving, from the first passenger, a request to modify attributes of the particular virtual avatar; and
transmitting, to a system operating the different shared virtual environment, an indication of the request to modify the particular virtual avatar.

8. The method of any one of claims 1-7, wherein each seatback display device is uniquely associated with a different passenger of the commercial passenger vehicle, wherein the shared virtual environment is visually provided to the first passenger of the commercial passenger vehicle via both a corresponding seatback display device and one or more personal electronic devices operated by the first passenger, and wherein determining the anonymity level for the first passenger comprises:
receiving the anonymity level for the first passenger via one of the corresponding seatback display device or the one or more personal electronic devices.

9. The method of claim 8, wherein the one or more personal electronic devices comprises a virtual reality head-mounted display device that is communicably coupled with a corresponding seatback display device.

10. The method of any one of claims 1-9, further comprising:
identifying, using the profile data associated with the first passenger, a recommended passenger to meet via the shared virtual environment; and
indicating, within the shared virtual environment via one of a seatback monitor or a personal electronic device operated by the first passenger, the recommended passenger.

11. The method of any one of claims 1-10, further comprising:
during the operation of the shared virtual environment, grouping a set of virtual avatars being operated by a set of passengers into an area within the shared virtual environment based on the set of virtual avatars having a common anonymity level.

12. The method of any one of claims 1-11, wherein the anonymity level is one of a plurality of anonymity levels, at least one of which includes a given virtual avatar for a given passenger visually indicating a vehicle seat number of the given passenger.

13. The method of any one of claims 1-12, wherein the shared virtual environment comprises a bulletin board via which the first passenger provides an invitation for virtual interactions with other passengers of the commercial passenger vehicle, wherein the virtual interaction is facilitated based on the second passenger viewing the invitation by the first passenger via the bulletin board.

14. A computing system comprising at least one processor and at least one memory storing instructions that, when executed by the at least one processor, cause the computing system to perform the method of any of claims 1-13.

15. A non-transitory computer-readable medium storing instructions that, when executed by a processor, cause the processor to perform the method of any of claims 1-13.
